Europäisches Patentamt

European Patent Office

Office européen des brevets

(11) Numéro de publication: **0 343 051**

**A1**

(12) # DEMANDE DE BREVET EUROPEEN

(21) Numéro de dépôt: **89401331.7**

(51) Int. Cl.⁴: **F 16 K 41/10**

(22) Date de dépôt: **12.05.89**

(30) Priorité: **17.05.88 FR 8806582**

(43) Date de publication de la demande:
**23.11.89 Bulletin 89/47**

(84) Etats contractants désignés:
**AT BE CH DE ES GB GR IT LI LU NL SE**

(71) Demandeur: **Dugast, Joseph**
**1, Rue de l'Abreuvoir**
**F-28260 Rouvres (FR)**

(72) Inventeur: **Dugast, Joseph**
**1, rue de l'Abreuvoir**
**F-28260 Rouvres (FR)**

**Sabatier, André**
**83, Avenue Kennedy**
**F-94190 Villeneuve Saint Georges (FR)**

**de Praetere, Raymond**
**1, rue des Coquelicots**
**F-91000 Evry (FR)**

(74) Mandataire: **Thibon-Littaye, Annick**
**11 rue de l'Etang**
**F-78160 Marly le Roi (FR)**

(54) **Vanne à soufflet.**

(57) La présente invention concerne une vanne du type comportant un circuit de fluide véhiculé (31) à l'intérieur d'un corps de vanne (1), un obturateur (34) mobile entre une position de repos et une position active parmi une position d'ouverture et une position de fermeture dudit circuit (31) et un système de soufflet annulaire élastique de liaison entre ledit obturateur (34) et ledit corps (1) fermant de manière étanche ledit circuit (31) par rapport à une chambre (32) d'admission d'un fluide de commande pneumatique des déplacements de l'obturateur (34) ménagé dans ledit corps (1), caractérisé en ce que ledit obturateur (34) est monté sur un piston (22) mobile axialement à l'intérieur dudit conduit (31) et en ce que ledit piston (22) comporte une plaque annulaire (23) limitant ladite chambre (32).

FIG.1

EP 0 343 051 A1

## Description

### VANNE A SOUFFLET

La présente invention concerne la réalisation de vannes de type à soufflet, utilisable dans l'industrie pour ouvrir et fermer des conduites sous commande pneumatique, et ce plus particulièrement dans des installations véhiculant des gaz de haute pureté sous forte pression.

Des vannes à soufflet connues comportent un circuit de fluide véhiculé ménagé à l'intérieur d'un corps de vanne, un obturateur mobile entre une première position et une deuxième position parmi une position d'ouverture et une position de fermeture du circuit de fluide véhiculé, et un système de soufflet annulaire élastique assurant la liaison entre l'obturateur et le corps de vanne pour fermer ledit circuit de manière étanche par rapport à une chambre d'admission d'un fluide de commande pneumatique de déplacement de l'obturateur ménagée dans le corps de vanne. Dans les réalisations actuelles le fluide de commande est en général admis sur une face d'un clapet constituant l'obturateur, tandis que l'autre face de ce clapet se déplace par rapport à un siège coopérant à l'intérieur du circuit de fluide véhiculé. Le système de soufflet étant fixé à l'obturateur directement au niveau du clapet, ceci oblige à donner au circuit de fluide véhiculé une forme complexe, impliquant des détours qui entraînent des pertes de charge et des risques de stagnation ou de turbulences du fluide.

De plus, les vannes actuelles ne permettent une répartition du fluide véhiculé au moyen d'une seule vanne que dans un plan.

La présente invention vise à éviter ces inconvénients, qui sont particulièrement préjudiciables dans les installations où le fluide véhiculé est un gaz de haute pureté. Par une conception nouvelle de vannes à soufflet, elle vise aussi à permettre une construction d'encombrement réduit et d'installation facile et à accroître la précision dans la réponse de la vanne aux ordres de commande pneumatique ainsi que la sécurité de fonctionnement.

L'invention vise également à réaliser une vanne qui puisse permettre la répartition du fluide véhiculé dans les trois dimensions de l'espace et qui puisse être utilisée dans plusieurs configurations sans nécessiter de modification du mécanisme de la vanne.

Selon sa caractéristique principale, l'invention a pour objet une vanne du type comportant un circuit de fluide véhiculé à l'intérieur d'un corps de vanne, un obturateur mobile entre une position de repos et une position active parmi une position d'ouverture et une position de fermeture dudit circuit et un système de soufflet annulaire élastique de liaison entre ledit obturateur et ledit corps fermant de manière étanche ledit circuit par rapport à une chambre d'admission d'un fluide de commande pneumatique des déplacements de l'obturateur ménagé dans ledit corps, caractérisé en ce que ledit obturateur est monté sur un piston mobile axialement à l'intérieur dudit conduit et en ce que ledit piston comporte une plaque annulaire limitant ladite chambre.

On fait ainsi avantageusement circuler le fluide véhiculé dans un conduit rectiligne, annulairement autour d'un piston mobile axialement dont une extrémité forme le clapet ou obturateur. L'obturateur mobile plein est propre à coopérer avec un siège annulaire fixe afin de fermer la vanne.

On peut ainsi également obtenir une vanne dont la répartition du fluide véhiculé puisse se faire dans les trois dimensions de l'espace du fait qu'une des dimensions n'est plus, comme auparavant, monopolisée par le corps de vanne et sa commande.

Selon une autre caractéristique particulièrement avantageuse, le système de soufflet est constitué de deux soufflets annulaires élastiques chacun d'eux s'étendant axialement de chaque côté de ladite plaque annulaire en liaison étanche avec celle-ci et jusqu'à respectivement deux disques fixes délimitant l'extrémité du corps de vanne, un premier disque limitant avec ladite plaque, ladite chambre et un second disque servant d'appui à un ressort de rappel dudit piston en position de repos, monté entre ladite plaque et ledit second disque.

Par l'emploi d'un tel système, on peut avantageusement équilibrer la pression du fluide de commande par un ressort taré d'une manière entièrement indépendante de la pression du fluide véhiculé.

Selon d'autres caractéristiques de l'invention :
- la vanne comporte à chaque extrémité du corps de vanne et s'appuyant sur lesdits disques, respectivement, deux flasques de répartition du fluide véhiculé, chacun des flasques présentant au moins un conduit débouchant par une tubulure de raccordement extérieur et le conduit d'un des flasques étant bouché par l'obturateur mobile dans sa position de fermeture, le siège annulaire propre à coopérer avec l'obturateur mobile étant constitué par le pourtour interne de l'extrémité dudit conduit,
- et le flasque d'une des deux ou des deux extrémités comporte un conduit en liaison permanente avec le circuit de fluide véhiculé par l'intermédiaire d'un perçage du flasque, ledit perçage étant non obturable par l'obturateur du piston.

On peut ainsi, sans toucher au mécanisme propre de la vanne, obtenir différentes configurations de répartition du fluide véhiculé ainsi que des voies, commandées ou non, utilisant la même vanne.

Selon une autre caractéristique particulièrement avantageuse, le corps de vanne comporte un premier perçage d'amenée d'un fluide de commande débouchant en permanence dans ladite chambre de commande et un second perçage qui ne débouche dans ladite chambre de commande que lorsque le piston est en position active.

Le contrôle du bon fonctionnement de la vanne qui nécessitait auparavant un détecteur de pression et un capteur de déplacement s'effectue désormais au moyen d'un simple détecteur de pression ou voyant pneumatique. En effet, le fluide de commande ne sort du corps de vanne par ledit second perçage, que lorsque ledit piston est en position active.

Ce second perçage permet également, de manière très simple, ne nécessitant aucun appareillage spécifique, la commande en cascade de plusieurs vannes de ce type.

Selon d'autres caractéristiques avantageuses :
- les disques comportent un épaulement annulaire s'engageant respectivement dans deux évidements correspondant du corps de base, servant à maintenir lesdits disques ;
- deux demi-coquilles sont intercalées entre le corps de vanne et l'une des flasques, lesdites demi-coquilles présentant un épaulement servant à maintenir ledit second disque ;
- la position de repos est déterminée par l'extrémité du piston sur laquelle est montée l'obturateur ;
- et selon une variante, la position de repos est déterminée par le sens dans lequel est monté l'ensemble piston/obturateur.

La position de repos ne dépend donc que de l'assemblage des éléments constitutifs de la vanne, on peut ainsi réduire considérablement les coûts de production du fait que les éléments sont fabriqués à l'identique pour toutes les vannes, seuls les flasques et l'assemblage des éléments sont différents selon les configurations désirées.

On obtient ainsi une vanne de réalisation simple, et modulable dans sa configuration. De plus, une telle vanne peut s'adapter à différents diamètres de tubulures, il suffit pour cela de changer le flasque concerné et l'obturateur mobile ou clapet, le reste des éléments étant conservé.

On décrira maintenant plus en détail une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les dessins annexés, dans lesquels :

- la figure 1 est une vue en coupe longitudinale d'une vanne selon la présente invention ;
- la figure 2 est une vue en coupe longitudinale d'une variante selon l'invention de la vanne représentée à la figure 1 ;
- la figure 3 est une vue en perspective et en coupe partielle d'une vanne munie d'un flasque de répartition à quatre voies de raccordement selon l'invention et d'un piston suivant une variante ;
- la figure 4 est une vue en coupe longitudinale d'une vanne munie d'un flasque de répartition à une voie commandée et une voie non commandée selon l'invention et d'un piston suivant une variante.

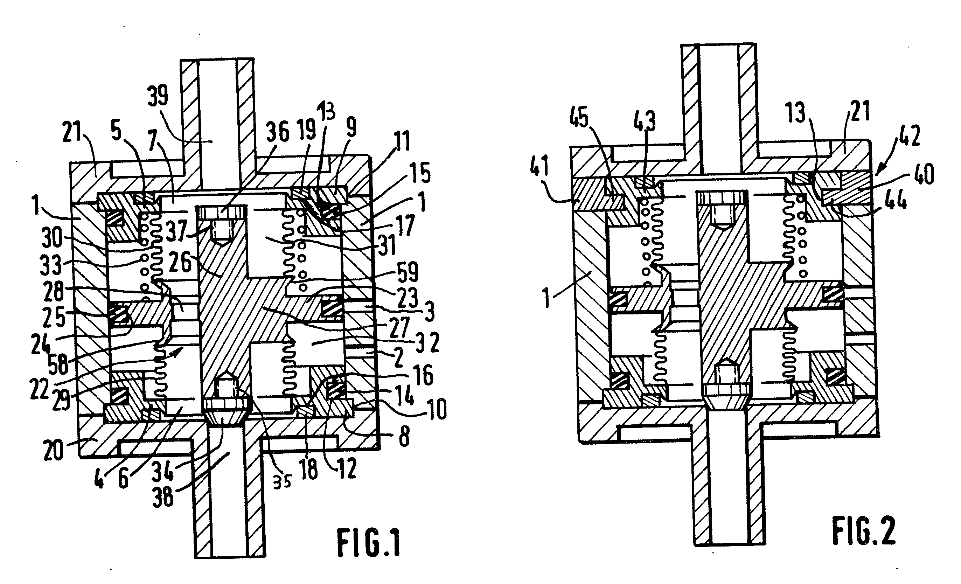

La vanne à soufflets représentée à la figure 1 comporte un corps de vanne 1 de forme tubulaire, et de préférence en métal, dans la paroi duquel sont ménagés deux perçages 2 et 3 destinés à l'air comprimé de commande. Le corps de vanne 1 présente à ses deux extrémités, deux disques identiques 4 et 5 munis chacun en leur centre d'une ouverture, respectivement 6 ou 7. Chaque disque 4 ou 5 est maintenu et positionné sur le corps de vanne 1 par soudure et au moyen d'un épaulement annulaire, respectivement 8 ou 9 qui s'appuie sur un dégagement respectivement 10 ou 11 du corps de vanne 1. Des dégagements annulaires destinés à recevoir des joints d'étanchéité sont de plus ménagés dans chaque disque 4 ou 5. L'un de ces dégagements respectivement 12 ou 13 est ménagé sur la tranche du disque 4 ou 5 et est destiné à un joint torique 14 ou 15 assurant l'étanchéité entre l'intérieur et l'extérieur du corps de vanne 1. L'autre dégagement respectivement 16 ou 17 est ménagé sur la surface du disque orientée vers l'extérieur par rapport au corps de vanne 1 et est destiné à un joint métallique respectivement 18 ou 19.

Deux flasques de répartition 20 et 21 viennent fermer le corps de vanne 1 en recouvrant les disques 4 et 5. Ces flasques 20 et 21 sont soudés annulairement au corps de vanne 1 et définissent la configuration des voies d'entrée et de sortie de la vanne.

Entre les deux disques 4 et 5 est disposé un piston 22. Celui-ci se compose d'une partie annulaire 23 venant en contact avec la paroi intérieure du corps de vanne 1 et présentant un dégagement 24 destiné à recevoir un joint torique 25, et d'une partie cylindrique 26 constituant l'élément d'obturation de la vanne. Ces deux parties 23 et 26 sont liées par l'intermédiaire d'un disque 27 qui présente des ouvertures 28 pour permettre le passage d'un fluide véhiculé à travers la vanne.

Deux soufflets métalliques 29 et 30 relient chaque disque 4 et 5 au piston 22. Ces soufflets sont soudés à chacune de leur extrémité, d'une part à un coin annulaire 58 ou 59 du piston 22 et d'autre part contre la surface intérieure du disque 4 ou 5, et ménagent ainsi une chambre ou un conduit annulaire de passage du fluide véhiculé 31 autour du piston 22 et une chambre annulaire de commande 32 délimitée en outre par le corps de base, la partie annulaire 23 du piston 22 et le disque 4.

Un ressort 33 permet de maintenir la vanne en position de repos en l'absence d'air comprimé de commande dans la chambre 32. Cette position de repos est pour la vanne représentée à la figure 1, une position normalement fermée. Un clapet plein 34 engagé dans un alésage intérieur 35 du piston 22 disposé à l'extrémité du piston opposée au ressort 33 détermine cette position normalement fermée. Un bouchon 36 obture un second alésage intérieur 37 opposé au premier alésage 35 et qui n'est pas utilisé. On remarque déjà aisément que pour obtenir une position de repos normalement ouverte, il suffit d'intervertir le clapet 34 et le bouchon 36.

Le fonctionnement de la vanne est le suivant.

Le piston 22 est maintenu, en l'absence d'air de commande dans une position normalement fermée par l'intermédiaire de la force exercée par le ressort 33 sur la partie annulaire 23 du piston 22. Le clapet 34 obture ainsi un conduit 38 débouchant par une tubulure de raccordement extérieur du flasque 20 et dont le pourtour de l'ouverture débouchant dans la chambre 31 constitue le siège annulaire du clapet ou obturateur plein 34, conduit qui est destiné au fluide véhiculé. Le fluide véhiculé entre dans la vanne par exemple par le conduit 38 du flasque 20 et ne peut ressortir par un conduit 39 du flasque 21.

Pour ouvrir la vanne, on envoie par le perçage 2 de l'air comprimé dans la chambre de commande 32. Le piston 22 se déplace alors vers le conduit 39 comprimant le ressort 33 par l'intermédiaire de la partie annulaire 23 du piston 22 et le clapet 34 dégage ainsi le conduit 38. Les soufflets 29 et 30 permettent d'assurer même lors de déplacement du piston une étanchéité entre la chambre de passage du gaz véhiculé 31 et la chambre de commande 32, les joints métalliques 18 et 19 assurant l'étanchéité entre la chambre de passage 31 et l'extérieur de la vanne.

Le perçage 3 du corps de vanne 1 permet en outre de s'assurer de manière simple, de l'ouverture de la vanne ou plus généralement de l'exécution de la commande. En effet, il suffit de placer un témoin pneumatique sur l'ouverture extérieure du perçage 3 pour que l'on détecte si le piston 22 s'est déplacé suffisamment pour permettre le passage du fluide véhiculé. Dans ce cas l'ouverture intérieure du perçage 3 n'est plus obturée par la partie annulaire 23 et le joint 25, et l'air comprimé sort par le perçage 3. Ce perçage peut également servir par exemple à effectuer une commande en cascade de plusieurs vannes de ce type, et ce, de manière très simple, le perçage 3 d'une première vanne étant mis en liaison avec le perçage 2 d'une deuxième vanne, le perçage 3 de cette deuxième vanne étant mis en liaison avec le perçage 2 d'une troisième vanne etc.

Dans ce cas, on est sûr que la deuxième vanne ne sera actionnée qu'après la première vanne et ainsi de suite, cette commande en cascade ne nécessite aucun appareillage de commande spécial pour synchroniser la commande des différentes vannes.

Les flasques 20 et 21 définissent la configuration spatiale de l'écoulement du fluide véhiculé. Du fait que la vanne n'est plus dans un plan distinct, et souvent perpendiculaire, aux conduits d'écoulement du fluide, on peut réaliser des configurations où les issues de la vanne sont réparties dans toutes les dimensions de l'espace. De plus ces changements de configuration s'effectuent comme on le verra plus loin par un simple changement des flasques de répartition.

La vanne représentée à la figure 2 est une variante selon l'invention qui permet un démontage aisé du flasque 21. Celui-ci n'est en effet plus soudé, mais fixé au corps de vanne 1 par des vis non représentées qui traversent deux demi-coquilles 40 et 41 constituant une bague 42. Le disque 5 de la vanne représentée à la figure 1 est ici remplacé par un disque 43 qui diffère du précédent par l'absence d'épaulement 9 (figure 1). L'assemblage s'effectue en engageant des épaulements 44 et 45 des demi-coquilles 40 et 41 dans le dégagement 13 précédemment destiné au joint 15 (figure 1), puis en fixant par vissage le flasque 21 sur le corps de vanne 1.

Les autres pièces constitutives de la vanne sont identiques à celles de la vanne représentée à la figure 1. Son fonctionnement est également identique.

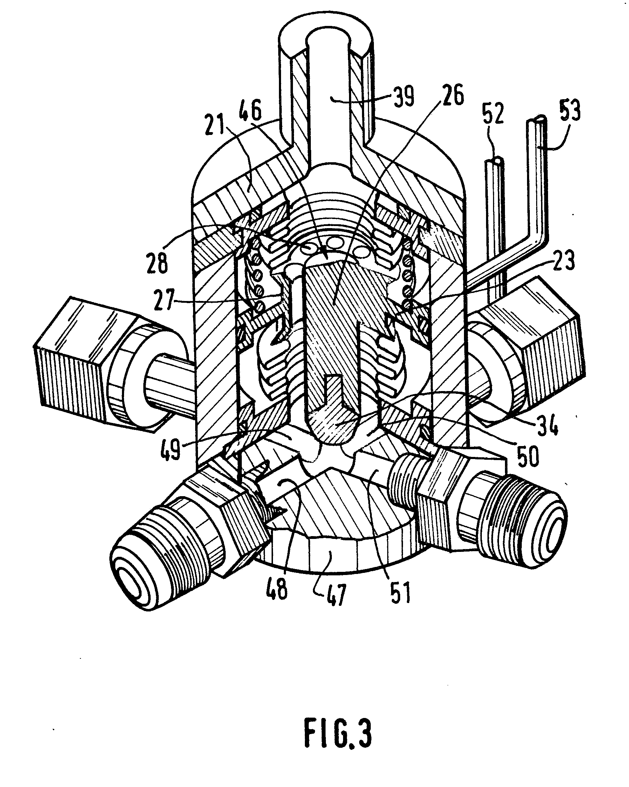

La figure 3 représente une variante selon l'invention dans laquelle le piston 46 n'est pas symétrique. Il est constitué des mêmes éléments que précédemment, partie annulaire 23, partie cylindrique 26, disque 27, ouvertures 28, mais la partie cylindrique 26 se termine, à son extrémité ne portant pat le clapet 34, au niveau du disque 27. Pour changer la position de repos de la vanne, on inverse dans ce cas l'ensemble piston 46/clapet 34. De plus, la figure 3 représente une variante de flasque de répartition 47. Celui-ci comprend quatre conduits 48, 49, 50 et 51 débouchant par des tubulures de raccordement extérieur dans un plan perpendiculaire à l'axe longitudinal de la vanne. Ces quatre conduits sont fermés lorsque la vanne est en position de repos. Le conduit 39 du flasque 21 est lui dans l'axe longitudinal de la vanne. On voit ainsi que l'on a une répartition des conduits véhiculant le fluide dans les trois dimensions de l'espace à partir d'une seule vanne. Le siège du clapet ou obturateur plein 34 est dans ce cas constitué par l'intersection des quatre conduits.

Deux conduits 52 et 53 sont respectivement raccordés aux perçages 2 et 3 (figure 1) du corps de vanne 1, le conduit 52 amenant l'air comprimé dans la chambre de commande 32 et le conduit 53 servant par exemple à véhiculer l'air comprimé du perçage 3 (figure 1) vers une autre vanne à commander en cascade.

Le fonctionnement ainsi que les autres éléments constitutifs de cette vanne sont identiques à ceux décrits à l'aide de la figure 1.

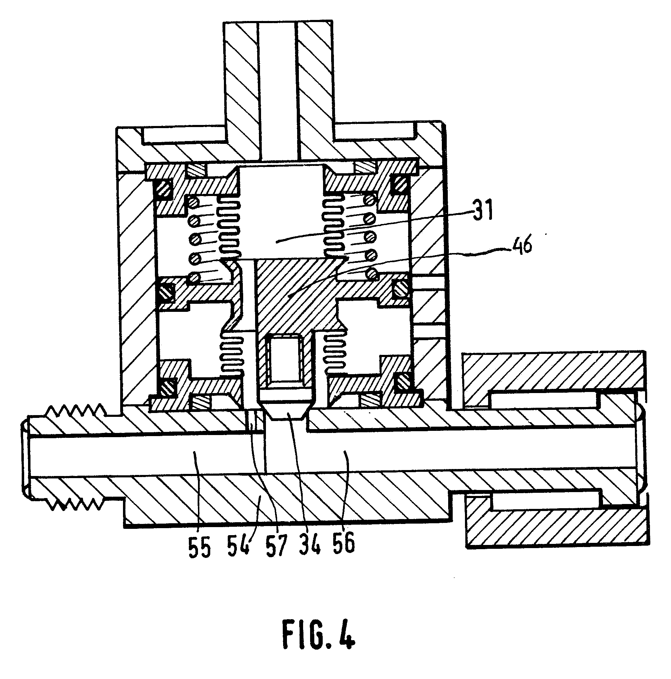

La figure 4 représente une vanne telle que celle représentée à la figure 3, mais équipée d'un flasque de répartition 54 différent. Celui-ci est pourvu de deux conduits 55 et 56 débouchant par des tubulures de raccordement extérieur. Le conduit 55 n'est pas en liaison avec l'ouverture du flasque commandée par le clapet 34, mais comprend une ouverture 57 le mettant en liaison directe avec la chambre de passage 31 du fluide véhiculé. Le conduit 56 est quant à lui en liaison avec l'ouverture du flasque commandée par le clapet 34 du piston 46.

On remarque aisément que l'on obtient ainsi, en ne changeant que le flasque de répartition, une vanne permettant la commande du passage du fluide dans un conduit 56 et le passage direct dans un autre conduit 55.

Il est bien entendu que le changement de flasque peut s'effectuer indifféremment d'un côté ou de l'autre du corps de vanne et que l'entrée du fluide véhiculé dans la vanne peut s'effectuer par l'un ou l'autre des flasques. Un flasque à deux conduits servant d'entrée dans la vanne peut permettre d'obtenir une vanne mélangeuse qui, si l'un des conduits est en passage direct, laisse passer soit un produit seul, soit un mélange.

Naturellement, l'invention n'est en rien limitée par les particularités qui ont été spécifiées dans ce qui précède ou par les détails des modes de réalisation particuliers choisis pour illustrer l'invention. Toutes sortes de variantes peuvent être apportées aux réalisations particulières qui ont été décrites à titre d'exemples et à leur éléments constitutifs sans sortir pour autant du cadre de l'invention. Cette dernière englobe ainsi tous les moyens constituant des équivalents techniques des moyens décrits ainsi que leurs combinaisons.

## Revendications

1. Vanne du type comportant un circuit de fluide véhiculé (31) à l'intérieur d'un corps de vanne (1), un obturateur (34) mobile entre une position de repos et une position active parmi une position d'ouverture et une position de fermeture dudit circuit (31) et un système de soufflet annulaire élastique de liaison entre ledit obturateur (34) et ledit corps (1) fermant de manière étanche ledit circuit (31) par rapport à une chambre (32) d'admission d'un fluide de commande pneumatique des déplacements de l'obturateur (34) ménagé dans ledit corps (1), caractérisée en ce que ledit obturateur (34) est monté sur un piston (22) mobile axialement à l'intérieur dudit conduit (31) et en ce que ledit piston (22) comporte une plaque annulaire (23) limitant ladite chambre (32), en ce qu'un ressort (33) est monté à l'intérieur du corps de vanne (1) pour appuyer sur la plaque annulaire (23) de façon à solliciter en permanence l'obturateur (34) vers sa position de repos fermant le circuit de fluide (31), et en ce que le corps de vanne (1) comporte un premier perçage d'amenée d'un fluide de commande (2) débouchant en permanence dans ladite chambre de commande (32) et un second perçage (3) qui ne débouche dans ladite chambre de commande (32) que lorsque le piston (22) est en position active.

2. Vanne selon la revendication 1, caractérisée en ce que ledit système de soufflet est constitué de deux soufflets annulaires élastiques (29,30), chacun d'eux s'étendant axialement de chaque côté de ladite plaque annulaire (23) en liaison étanche avec celle-ci et jusqu'à respectivement deux disques fixes (4,5) délimitant l'extrémité du corps de vanne (1), un premier disque (4) limitant avec ladite plaque (23), ladite chambre (32) et un second disque (5) servant d'appui à un ressort (33) de rappel dudit piston (22) en position de repos, monté entre ladit plaque (23) et ledit second disque (5).

3. Vanne selon la revendication 1 ou 2, caractérisée en ce qu'elle comporte à chaque extrémité du corps de vanne (1) et s'appuyant sur lesdits disques (4,5), respectivement deux flasques (20,21) de répartition du fluide véhiculé, chacun des flasques (20,21) présentant au moins un conduit (38,39) débouchant par une tubulure de raccordement extérieur et le conduit (38) d'un des flasques (20) étant bouché par l'obturateur mobile (34) dans sa position de fermeture.

4. Vanne selon la revendication 3, caractérisée en ce que le flasque (54) d'une des deux ou des deux extrémités comporte un conduit (55) en liaison permanente avec le circuit de fluide véhiculé (31) par l'intermédiaire d'un perçage (57) du flasque, ledit perçage (57) étant non obturable par l'obturateur (34) du piston (22).

5. Vanne selon l'une quelconque des revendications 2 à 4, caractérisée en ce que lesdits disques (4,5) comportent un épaulement annulaire (8,9) s'engageant respectivement dans deux évidements correspondant du corps de base (1), servant à maintenir lesdits disques (4,5).

6. Vanne selon l'une quelconque des revendications 3 ou 4, caractérisée en ce que deux demi-coquilles (40,41) sont intercalées entre le corps de vanne (1) et l'une des flasques (21), lesdites demi-coquilles présentant un épaulement (44,45) servant à maintenir ledit second disque (5).

7. Vanne selon l'une quelconque des revendications précédentes, caractérisée en ce que la position de repos est déterminée par l'extrémité du piston (22) sur laquelle est montée l'obturateur (34) ;

8. Vanne selon l'une quelconque des revendications précédentes, caractérisée en ce que la position de repos est déterminée par le sens dans lequel est monté l'ensemble piston (22)/obturateur (34).

9. Vanne selon la revendication 3 ou 4, caracté risée en ce que les flasques constituant les conduits d'arrivée et de sortie de la vanne sont amovibles et peuvent être échangés pour modifier la fonction de la vanne et en ce que le second passage d'une première vanne est relié au premier passage d'une seconde vanne pour constituer la commande de cette seconde vanne.

FIG.1

FIG.2

EP 0 343 051 A1

FIG.3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 338 912 (WEHNL)<br>* Page 3, ligne 8 - page 5, ligne 5 * | 1,3,5,7,8 | F 16 K 41/10 |
| A | FR-A-1 502 695 (JAVELLAUD)<br>* En entier * | 1 | |
| A | DE-A-2 207 580 (KAISER)<br>* En entier * | 1 | |

**DOMAINES TECHNIQUES RECHERCHES (Int. Cl.4 )**

F 16 K

Le présent rapport a été établi pour toutes les revendications

| Lieu de la recherche | Date d'achèvement de la recherche | Examinateur |
|---|---|---|
| LA HAYE | 02-08-1989 | VERELST P.E.J. |